# EUROPÄISCHE PATENTSCHRIFT

(11) **EP 2 082 673 B1**
(45) Veröffentlichungstag und Bekanntmachung des Hinweises auf die Patenterteilung: **18.08.2010**
(21) Anmeldenummer: 09150064.5
(22) Anmeldetag: 05.01.2009
(51) Int. Cl.: A47J 43/25

(54) **Reibe für zerreibbare Nahrungsmittel**
Grater for grateable food
Râpe pour aliments pouvant être râpés

(30) Priorität: 24.01.2008 CH 972008
(43) Veröffentlichungstag der Anmeldung: 29.07.2009
(73) Patentinhaber: MOHA Moderne Haushaltwaren AG, 1214 Vernier (CH)
(72) Erfinder: Greiner, Ulrich, 89231 Neu-Ulm (DE)
(74) Vertreter: Feldmann, Clarence Paul

(56) Entgegenhaltungen:
- EP-A- 1 541 073
- EP-A- 1 554 962
- DE-U1- 20 117 358
- US-A- 3 552 460

## Beschreibung

### Technisches Gebiet

Die vorliegende Erfindung beschreibt eine Reibe für zerreibbare Nahrungsmittel unterschiedlicher Härtegrade umfassend einen mit einem Deckel verschliessbaren Reibbehälter, in welchem ein Mitnehmerelement mit einer Mehrzahl von Führungselementn rotativ bewegbar gelagert ist und in welchem eine Vorschubscheibe von einer Einführseite des Reibbehälters zu einer Reibseite linear in Richtung der Längsachse des Reibbehälters bewegbar gelagert ist, wobei im Reibbehälter befindliches Reibgut durch das Mitnehmerelement über einen an der Reibseite lösbar am Reibbehälter befestigten Reibeinsatz führbar ist.

### Stand der Technik

Heute finden Reiben zum Zerreiben von unterschiedlichen Nahrungsmitteln vermehrt Einsatz in Haushalten, mit welchen Nahrungsmittel bequem und in der vom Anwender benötigten Menge zerrieben werden können.

In bekannten Ausführungsformen von Reiben wird das zu reibende Nahrungsmittel, das Reibgut, in einem zylindrischen oder konischen Reibbehälter, auf einem Reibeinsatz, welcher eine Mehrzahl von Durchgangslöchern aufweist, bewegbar gelagert. In den Reibbehälter durch eine Einführseite hineinragend ist ein Stempel angeordnet, durch welchen das Reibgut vertikal nach unten auf den Reibeinsatz gepresst bewegbar ist. Der Stempel ist rotierbar im Reibbehälter gelagert und bei der Rotation des Stempels wird das Reibgut über den Reibeinsatz bewegt, wodurch das Zerreiben des Reibgutes resultiert. Der Stempel ist einfach aus dem Reibbehälter herausziehbar, wodurch neues Reibgut schnell und einfach nachgefüllt werden kann. Zieht der Anwender den Stempel aus dem Reibbehälter heraus, so liegt das Reibgut frei und kann mit der Umwelt in Kontakt kommen. Eine solche Reibe birgt die Gefahr, dass der Anwender ungewollt in Kontakt mit dem Reibgut kommt oder dass Verunreinigungen des Reibgutes durch Entfernung des Stempels auftreten können. Ein weiterer Nachteil von Reiben der hier beschriebenen Art ist die variierende Höhe der Reibe, wobei die Höhe von der Masse des eingefüllten Reibgutes abhängt. Grösstenteils ist es nicht möglich, gefüllte Reiben in einem Kühlschrank zu verstauen, so dass eine Entnahme des Reibgutes und eine Lagerung in einem separaten Gefäss vor der Kühlung erfolgen muss.

Eine Reibe mit einer konstanten und von dem Befüllungsgrad unabhängigen Bauhöhe ist in der EP 1554962 B1 offenbart. Ein becherförmiger Reibbehälter wird auf einer Grundplatte, von welcher eine Gewindestange mit einem Aussengewinde vertikal nach oben ragt, drehbar gelagert. Das Reibgut befindet sich in dem Reibbehälter. Ein innerhalb des Reibbehälters bewegbarer Stempel mit einem zentralen Gewindeloch wird durch die Rotation des Reibbehälters in vertikaler Richtung in Richtung der Grundplatte gepresst, wodurch das Reibgut gegen einen Reibeinsatz in der Grundplatte gepresst wird. Da der Reibbehälter einen mehreckigen Querschnitt aufweist, wird das im Reibbehälter befindliche Reibgut mit der Rotationsbewegung des Reibbehälters mitgeführt, wodurch das Reibgut unter Druck über den Reibeinsatz bewegbar ist. Das Reibgut kann somit durch die Rotationsbewegung des Reibbehälters zerrieben werden.

Die Wirkverbindung zwischen der Gewindestange mit Aussengewinde und dem bewegbaren Stempel, welcher ein Innengewinde aufweist, gewährleistet das Zerreiben des Reibgutes, wobei die Bauhöhe zu jeder Zeit konstant ist und somit die Reibe befüllt im Kühlschrank lagerbar ist. Nachteilig wirkt sich aus, dass der Innenraum des Reibbehälters von dem Gewindestab zentrisch durchsetzt ist, wodurch die Grösse der zerreibbaren Nahrungsmittel begrenzt ist, bzw. das Reibgut vor dem Einfüllen in die Reibe entsprechend zerkleinert werden muss.

Nicht offenbart ist, ob und wie die Reibe der EP1554962 gegen eine ungewollte Öffnung und damit der ungewollten Freisetzung des Reibguts durch einen Anwender gesichert ist.

### Darstellung der Erfindung

Die vorliegende Erfindung hat sich zur Aufgabe gestellt, eine Reibe für zerreibbare Nahrungsmittel zu schaffen, welche es erlaubt, grössere Portionen von Nahrungsmitteln in einem Reibbehälter aufnehmen zu können, wobei die Bauhöhe immer konstant bleibt, unabhängig davon wie stark der Reibbehälter befüllt ist, und in Folge dessen die Reibe auch im befüllten Zustand im Kühlschrank lagerbar ist.

Zusätzlich zu dieser Aufgabe erlaubt die erfindungsgemässe Reibe eine vereinfachte Füllung mit Nahrungsmitteln, wobei ein Benutzer nicht mit Reibgut in Kontakt kommt.

### Kurze Beschreibung der Zeichnungen

Mehrere Ausführungsformen des Erfindungsgegenstandes werden nachstehend im Zusammenhang mit den anliegenden Zeichnungen beschrieben.

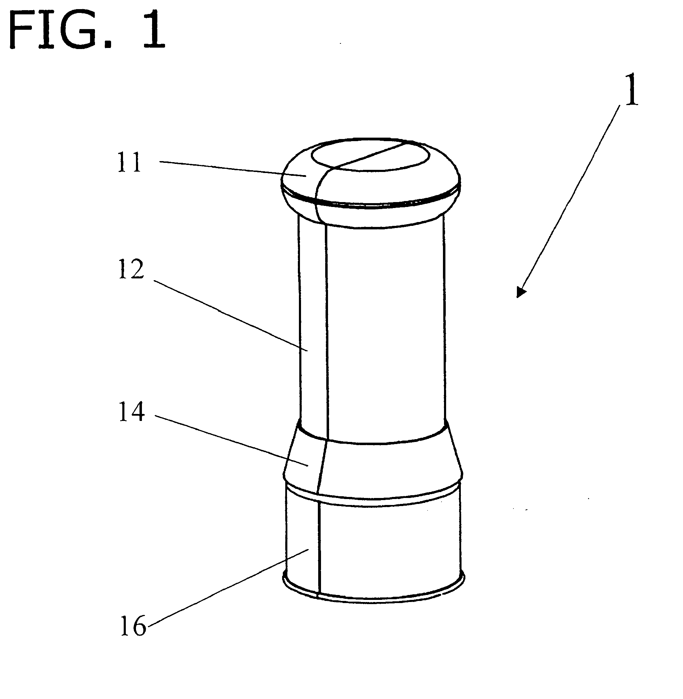

- Figur 1: zeigt eine perspektivische Ansicht einer erfindungsgemässen Reibe.
- Figur 2: zeigt eine Explosionsdarstellung einer ersten bevorzugten Ausführungsform der erfindungsgemässen Reibe, wobei die Vorschubscheibe ein segmentiertes Aussengewinde aufweist, während
- Figur 3: eine weitere vorteilhafte Weiterbildung einer Reibe zeigt, wobei das Innengewinde im Reibbehälter segmentiert ausgeführt ist.
- Figur 4: zeigt ein Mitnehmerelement mit flexiblen Führungselementen einer Ausführungsform der erfindungsgemässen Reibe zum Zerreiben von weichen Nahrungsmitteln, am Beispiel von Schabziger.

### Beschreibung

Es werden mehrere Ausführungsformen einer erfindungsgemässen Reibe 1 beschrieben. Die Reibe 1 umfasst einen Reibbehälter 12, welcher zylindrisch oder konisch geformt ist und neben einer Einführseite 120 eine, der Einführseite 120 diametral gegenüberliegende Reibseite 124 aufweist.

Der Reibbehälter 12 wird mit Reibgut 2 in Form unterschiedlicher zerreibbarer Nahrungsmittel verschiedener Härtegrade und Grössen, zum Beispiel mit Parmesankäse, Schokolade oder Nüssen gefüllt. Das Reibgut 2 wird durch einen im weiteren Verlauf der Beschreibung näher erläuterten Mechanismus innerhalb des Reibbehälters 12 zerreibbar gelagert. Damit das Rotieren von Reibgut 2 über einen Reibeinsatz 13 möglich ist, sollte der Reibbehälter 12 die Form eines geraden Kreiszylinders mit kreisförmiger Grundfläche bzw. die Form eines geraden Kreiskegels haben.

An der Reibseite 124 ist der Reibeinsatz 13, mittels Bajonettverschluss oder durch einen Drehverschluss durch einen Haltering 14 lösbar mit dem Reibbehälter 12 verbunden. In einer Ausführungsform ist ein Bajonettverschluss vorgesehen, wobei ein Nocken 140 am Haltering 14 in einen Schlitz 125 im unteren Abschnitt des Reibbehälters 12 im Bereich der Reibseite 124 eingreift. Der Reibeinsatz 13 wird durch den Haltering 14 ortsfest und unbewegbar an der Reibseite 124 mit dem Reibbehälter 12 verbunden, sodass bei einer Bewegung des Reibguts 2 innerhalb des Reibbehälters 12, Reibgut 2 mittels Reibeinsatz 13 zerrieben wird.

Um ein unerwünschtes Herausrieseln von Reibgut 2 durch den Reibeinsatz 13 aus dem Reibbehälter 12 heraus zu vermeiden, ist eine Verschlusskappe 15 vorgesehen, welche den Haltering 14 auf der dem Reibeinsatz 13 gegenüberliegenden Seite abdichtet. Wenn ein Benutzer Reibgut 2 mit der Reibe 1 auf Vorrat reiben möchte ist ein Auffangbehälter 16 vorgesehen, welcher unterhalb des Halteringes 14 angebracht wird und nach unten geschlossen ist.

Um das Reibgut 2 innerhalb des Reibbehälters 12 zu rotieren und durch den Reibeinsatz 13 zu zerreiben, sind die im Folgenden beschriebenen Elemente nötig. Ein Mitnehmerelement 122, welches einen Kragen 1222 und eine Mehrzahl von Führungselementen 1220 aufweist, ist in das Innere des Reibbehälters 12 gesteckt, kraftschlüssig mit dem Reibbehälter 12 verbunden und dort rotierbar gelagert. Dabei verlaufen die Führungselemente 1220 mindestens annährend parallel zu den Seitenwänden des Reibbehälters 12 von der Einführseite 120 in Richtung der Reibseite 124. Die Führungselemente 1220 ragen nicht über die Seitenwände des Reibbehälters 12 hinaus und schliessen im Zusammengebauten Zustand bündig mit dem Reibeinsatz 13 ab. Der Kragen 1222 ragt aus der Einführseite 120 des Reibbehälters 12 heraus, wobei das Überkragen des Kragens 1222 die Einführtiefe des Mitnehmerelementes 122 in den Reibbehälter 12 begrenzt.

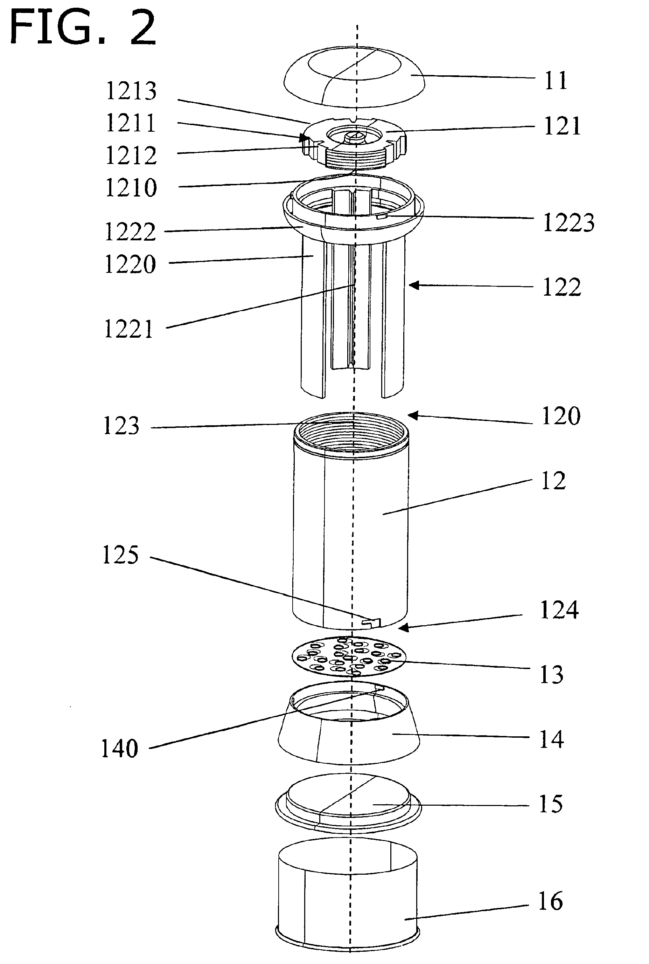

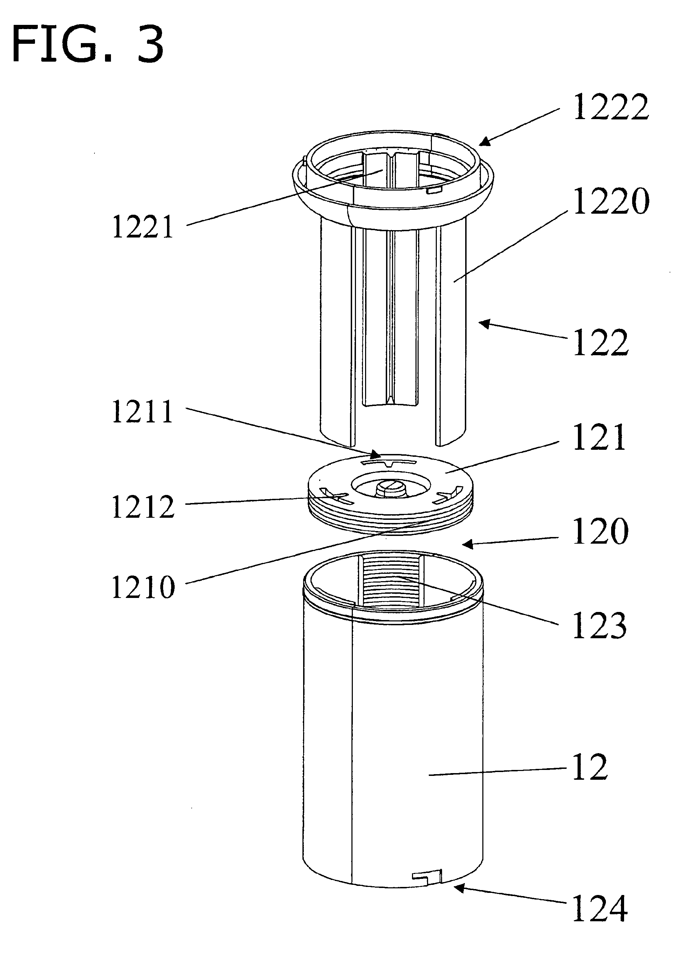

Die Mehrzahl der Führungselemente 1220 dient dazu das Reibgut 2 relativ zum Reibbehälter 12 radial zu bewegen. Durch diese Bewegung wird das Reibgut 2 über den Reibeinsatz 13 geführt, so dass einzelne Lagen des Reibgutes 2 abgetragen werden können. An den einzelnen Führungselementen 1220 sind Rippen 1221 angeformt oder können an diesen lösbar oder unlösbar befestigt sein, wodurch das Halten und das Mitführen die Mitführung des Reibgutes 2 während der Rotation erreicht und verbessert werden kann. In den Figuren 2 und 3 sind mögliche Ausführungsformen des Mitnehmerelementes 122 dargestellt, wobei jeweils drei Führungselemente 1220 mit jeweils einer angeformten Rippe 1221 vorgesehen sind. Die Rippentiefe, der in Richtung Drehachse der Reibe 1 ragende Abschnitt der Rippen 1221, ist für alle Rippen 1221 gleich lang ausgeführt. Die Rippen 1221 bewegen die Nahrungsmittel und damit das Reibgut 2 relativ zum Reibbehälter, wobei die Rippen 1221 in direkten Kontakt mit dem Reibgut 2 kommen.

Vor allem, wenn das Reibgut 2 aus kleineren zerreibbaren Nahrungsmitteln wie Schokolade oder Nüssen besteht, ist es vorteilhaft die Rippentiefe der Rippen 1221 so aus zu gestalten, dass mindestens eine Rippe 1221 weiter in den Reibbehälter 12 hineinragt, wobei das Überspannen einer Rippe 1221 bis zur Mittelachse des Reibbehälters 12 oder über die Mittelachse hinaus vorteilhaft ist.

Das Mitnehmerelement 122 wird mit einem Deckel 11 versehen, welcher in einer möglichen Ausführungsform durch einen Bajonettverschluss mit dem Kragen 1222, welcher aus dem Reibbehälter 12 herausragt, verbunden ist. Mindestens ein Kragennocken 1223 greift zur lösbaren Befestigung des Deckels 11 am Kragen 1222 in eine geeignete Aussparung an der Innenseite des Deckels 11 ein, wodurch der Deckel 11 lösbar mit dem rotierbar im Reibbehälter 12 gelagerten Mitnehmerelement 122 verbunden ist.

In der Figur 2 ist eine erste bevorzugte Ausführungsform einer erfindungsgemässen Reibe 1 dargestellt, welche im Folgenden erläutert wird. Die Innenseite des Reibbehälters 12 der Reibe 1 ist mit einem durchgehenden Innengewinde 123 versehen, wobei der Gewindegang des Innengewindes 123 auf der gesamten Innenfläche des Reibbehälters 12 verläuft.

Es ist eine Vorschubscheibe 121 vorgesehen, welche das Hinunterdrücken des Reibgutes 2 auf den Reibeinsatz 13 bewerkstelligt. Diese Vorschubscheibe 121 ist zylindrisch ausgeführt und weist ein Aussengewinde 1210 auf, welches einen Teil der Mantelfläche 1213 der Vorschubscheibe 121 bedeckt. Damit ist das Aussengewinde 1210 in dieser beschriebenen ersten Ausführungsform segmentiert ausgeführt. In die Mantelfläche 1213 der Vorschubscheibe 121 sind ausserdem, der Anzahl der Führungselemente 1220 des jeweiligen Mitnehmerelementes 122 entsprechend, Führungselementaussparungen 1211 eingeformt, welche mit den Führungselementen 1220 wirkverbunden sind. Die Vorschubscheibe 121 ist im Mitnehmerelement 122 platzierbar und ist durch die Mehrzahl der Führungselemente 1220 geführt mit dem Mitnehmerelement 122 bewegbar.

Nach Abnahme des Deckels 11 vom Kragen 1222 wird die Vorschubscheibe 121 im Bereich der Einführseite 120 durch den Kragen 1222 des Mitnehmerelementes 122 in den Reibbehälter 12 eingeführt, wobei das Aussengewinde 1210 in der Mantelfläche 1213 der Vorschubscheibe 121 in das Innengewinde 123 im Reibbehälter 12 eingreift. Nach Befestigung des Deckels 11 der Reibe 1 auf dem Kragen 1222 kann das Mitnehmerelement 122 durch Drehung des Deckels 11 innerhalb des Reibbehälters 12 rotiert werden, wobei der Deckel 11 den Raum oberhalb der Vorschubscheibe 121 abschliesst. Dieser Raum oberhalb der Vorschubscheibe 121 kann unter anderem als Aufbewahrungsraum für weitere Reibeinsätze 13 dienen. Durch das Zusammenwirken des Innengewindes 123 mit dem Aussengewinde 1210 wird die Vorschubscheibe 121 rotiert und linear in Richtung Reibseite 124 durch den Reibbehälter 12 bewegt.

Die Führungselemente 1220 sind in den Führungselementaussparungen 1211 zwischen der Vorschubscheibe 121 und der Wand des Reibbehälters 12 linear unbewegbar gelagert, wobei das gesamte Mitnehmerelement 122 im Reibbehälter 12 rotiert.

In den Führungselementaussparungen 1211 an der Vorschubscheibe 121 sind Nuten 1212 vorgesehen, durch welche die Rippen 1221 geführt sind, wodurch eine stabile Lagerung der Vorschubscheibe 121 zwischen den Führungselementen 1220 des Mitnehmerelementes 122 erreichbar ist und ein kontinuierliches und sicher geführtes Mitdrehen der Vorschubscheibe 121 gewährleistet ist. Die Sicherung der Vorschubscheibe 121 durch Führung der Rippen 1221 der Führungselemente 1220 durch die Nuten 1212 ist vorteilhaft, um ein Verkannten des Aussengewindes 1210 im Innengewinde 123 zu verhindern.

Im Reibbehälter 12 befindliches Reibgut 2 wird durch die Führungselemente 1220 des Mitnehmerelements 122 rotiert und durch die, in Richtung Reibeinsatz 13 weisende Unterseite der Vorschubscheibe 121 auf den Reibeinsatz 13 gepresst, wodurch das Reibgut 2 zerrieben wird.

Um das Pressen des Reibgutes 2 auf den Reibeinsatz 13 zu verbessern, ist die Unterseite der Vorschubscheibe 121 mit Dornen versehen, welche in das Reibgut 2 eingreifen.

In einer weiteren Ausführungsform der erfindungsgemässen Reibe 1 ist ein Aussengewinde 1210 in der Mantelfläche 1213 der Vorschubscheibe 121 angeformt, welches die Mantelfläche 1213 durchgehend umspannt. Diese zweite Variation einer erfindungsgemässen Ausführungsform welche in Figur 3 gezeigt ist, weist die Vorschubscheibe 121 mit Führungselementaussparungen 1211 auf, welche vom Rand der Vorschubscheibe 121 beabstandet eingefräst sind. Vorteilhafterweise weisen die Führungselementaussparungen 1211 jeweils eine ausgesparte Nut 1212 auf, so dass die Führungselemente 1220 des Mitnehmerelementes 122 durch die Führungselementaussparungen 1211 durchführbar und in sicher lösbar befestigt gehalten sind. Auch hier sichert die Nut-Feder Verbindung zwischen der Führungselementaussparung 1211 und der Führungselemente 1220 dafür, dass die Vorschubscheibe 12 kontrolliert rotiert und mitgeführt wird.

Der Reibbehälter 12, welcher mit einer Vorschubscheibe 12 mit durchgehendem Aussengewinde 1210 verwendbar ist, weist ein segmentiertes Innengewinde 123 auf, welches in einer Mehrzahl von Segmenten innerhalb des Reibbehälters 12 verläuft und mit dem Aussengewinde 1210 wirkverbunden ist. Die Segmente mit Aussengewinde 1210 verlaufen die Innenwand des Reibbehälters 12 überdeckend von der Einführseite 120 bis zur Reibseite 124. Die Führungselemente 1220 des Mitnehmerelementes 122 werden durch die Führungselementaussparungen 1211 in der Vorschubscheibe 121 geführt. Das mit der Vorschubscheibe 121 verbundene Mitnehmerelement 122 wird dann durch die Einführseite 120 in den Reibbehälter 12 eingelassen, wobei das durchgehende Aussengewinde 1210 in das segmentierte Innengewinde 123 des Reibbehälters 12 eingreift.

Der Anwender der Reibe gemäss obiger zweiter Ausführungsform muss die Führungselemente 1220 durch die Führungselementaussparungen 1211 von oben hindurchführen und die Vorschubscheibe 121 in Richtung Kragen 1222 bewegen, bevor das Mitnehmerelement 122 mit aufgesteckter Vorschubscheibe 121 in den Reibbehälter 12 eingeführt wird. Durch die Rotation des Mitnehmerelementes 122 wird die Vorschubscheibe 121 rotierend mitbewegt und durch den Eingriff des Aussengewindes 1210 in das Innengewinde 123 findet eine lineare Verschiebung der Vorschubscheibe in Richtung der Längsachse der Reibe 1 statt. Je nach Drehrichtung wird die Vorschubscheibe 121 in Richtung Einführseite 120 oder Reibseite 124 bewegt.

Da die Bauteile der erfindungsgemässen Reibe 1 vorteilhafterweise aus Kunststoff hergestellt werden, ist die nötige Leichtgängigkeit der Rotationsbewegung und der Linearbewegung der Vorschubscheibe 121 durch die Wirkverbindung des Innengewindes 123 mit dem Aussengewinde 1210 einfach durch die oben beschriebene Segmentierung eines der beiden Gewinde 123, 1210 erreichbar.

Es ist selbstverständlich möglich, Rechtsgewinde oder Linksgewinde vorzusehen, wobei die Reibe 1 für Rechts- oder für Linkshänder auslegbar ist.

Die Herstellung des Innengewindes 123 im Reibbehälter 12 ist sorgfältig durchzuführen, damit die Vorschubscheibe 12 leichtgängig durch den Reibbehälter 12 bewegbar ist. Das Innengewinde 123 kann beispielsweise durchgängig in den aus Kunststoff gefertigten Reibbehälter 12 geschnitten werden. Es ist aber auch möglich, zwei halbzylindrische Hälften des Reibbehälters 12 im Spritzgussverfahren mit jeweils angeformten Innengewinden 123 herzustellen und anschliessend zusammen zu schweissen. Die für die erfindungsgemässe Reibe 1 verwendeten Gewinde 123, 1210 können wahlweise eingängig oder mehrgängig gewählt sein.

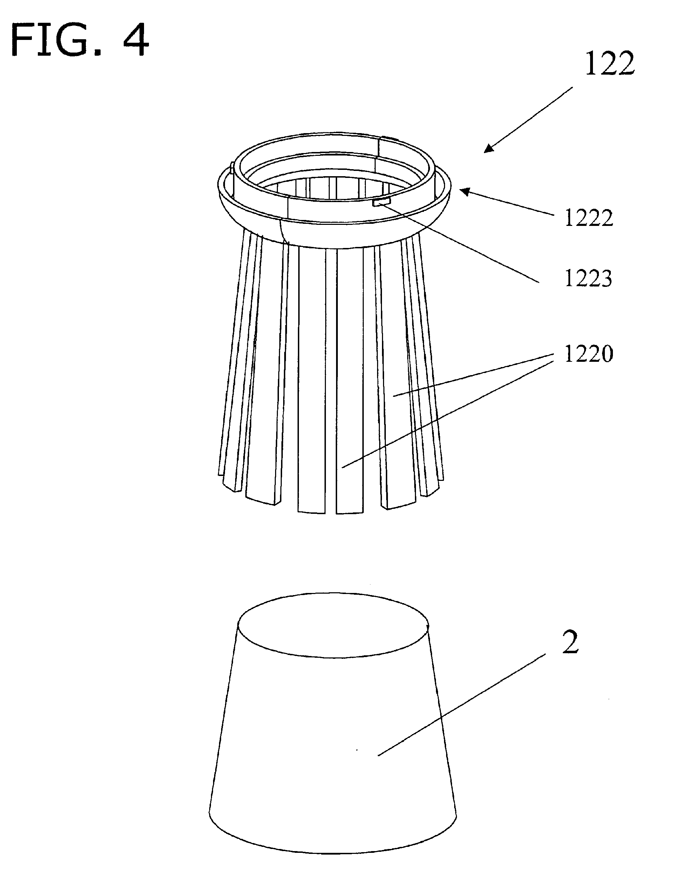

Für einige Anwendungen kann es vorteilhaft sein, dass die Führungselemente 1220 des Mitnehmerelements 122 flexibel ausgeführt sind, damit diese Führungselemente 1220 das Reibgut 2 gut und fest umschliessen können. Dies ist beispielsweise für eine Reibe 1 zum Zerreiben von Schabziger 2, einer Schweizer Käse-Spezialität aus dem Kanton Glarus, vorteilhaft, da der Schabziger 2 in Form eines Kegelstumpfes angeboten wird. Eine spezielle Ausführungsform ist in der Figur 4 offenbart, wobei angedeutet ist, wie die Führungselemente 1220 an der Mantelfläche des kegelstumpfförmigen Schabzigers 2 vorbei führbar sind.

Die äussere Form des Reibbehälters 12 kann dem kegelstumpfförmigen Schabziger 2 entsprechend angepasst gewählt sein, wodurch eine kegelstumpfförmige Reibe 1 resultiert. Die Vorschubscheibe 121 ist durch die Wirkverbindung mit dem Innengewinde im Reibbehälter 12 rotativ und linear auf das Reibgut 2 press- und bewegbar. Je nach linearer Position der Vorschubscheibe 121 innerhalb des Reibbehälters 12 werden die flexibel ausgeführten Führungselemente 1220 mehr oder weniger in Richtung Längsachse der Reibe 1 gedrückt, wodurch das Reibgut 2 von den Führungselemente 1220 umschlossen wird. Die Führungselemente 1220 werden durch die Vorschubscheibe in Richtung Zentrum des Reibbehälters 12 ausgelenkt. Das Reibgut 2 wird bis zum vollständigen Zerreiben gänzlich von den Seiten durch die Führungselemente 1220 umfasst, so dass der Schabziger 2 vollständig zerreibbar ist.

Nachdem die Vorschubscheibe 121 der erfindungsgemässen Reibe 1 linear von der Einführseite 120 bis zur Reibseite 124 des Reibbehälters 12 wirkverbunden mit dem Innengewinde 123 im Reibbehälter 12 geführt wurde, kann die Vorschubscheibe 121 an der Reibseite 124 aus dem Reibbehälter 12 entnommen werden und nach der Entfernung des Deckels 11 wieder durch den Kragen 1222 des Mitnehmerlementes 122 mit den Führungselementen 1220 verbunden in das Mitnehmerlement 122 eingeführt werden. Es ist damit nicht nötig, die Vorschubscheibe 121 durch den Reibbehälter 12 zurück nach oben Richtung Deckel 11 zu bewegen, um neues Reibgut 2 im Reibbehälter 12 zu positionieren und die Reibe 1 zu schliessen. Dadurch kann die Reibe 1 nach dem vollständigen Zerreiben von Reibgut 2 schnell und unkompliziert gefüllt werden und wieder einsatzbereit sein.

Konstruktionsbedingt weist die Reibe 1 einen geschlossenen und nicht ungewollt öffenbaren Reibbehälter 12 auf, wodurch ein Benutzer nicht ungewollt mit Reibgut 2 in Kontakt kommen kann. Lediglich zum Befüllen nach abgeschlossenem Reibvorgang, wird der Reibbehälter 12 kurzzeitig geöffnet.

### Bezugszeichenliste

- 1: Reibe
11 Deckel
12 Reibbehälter
120 Einführseite
121 Vorschubscheibe
1210 Aussengewinde
1211 Führungselementaussparung
1212 Nut
1213 Mantelfläche
122 Mitnehmerelement
1220 Führungselement
1221 Rippe
1222 Kragen
1223 Kragennocke
123 Innengewinde
124 Reibseite
125 Schlitz
13 Reibeinsatz
14 Haltering (für Reibeinsatz)
140 Nocken
15 Verschlusskappe
16 Auffangbehälter
- 2: Reibgut

## Patentansprüche

1. Reibe für zerreibbare Nahrungsmittel unterschiedlicher Härtegrade mit konstant bleibender Bauhöhe umfassend einen mit einem Deckel (11) verschliessbaren Reibbehälter (12), in welchem ein Mitnehmerelement (122) mit einer Mehrzahl von Führungselementen (1220) rotativ bewegbar gelagert ist und in welchem eine Vorschubscheibe (121) von einer Einführseite (120) des Reibbehälters (12) zu einer Reibseite (124) linear in Richtung der Längsachse des Reibbehälters (12) bewegbar gelagert ist, wobei im Reibbehälter (12) befindliches Reibgut (2) durch das Mitnehmerelement (122) über einen an der Reibseite (124) lösbar am Reibbehälter (12) befestigten Reibeinsatz (13) führbar ist,
**dadurch gekennzeichnet, dass** die Vorschubscheibe (121) mit einem Aussengewinde (1210) auf einer Mantelfläche (1213) versehen ist, welches in Wirkverbindung mit einem im Reibbehälter (12) befindlichen Innengewinde (123) ist, wodurch die Vorschubscheibe (121) linear bewegbar ist und auf ein Reibgut (2) innerhalb des Reibbehälters (12) pressbar ist.

2. Reibe nach Anspruch 1, **dadurch gekennzeichnet, dass** die Vorschubscheibe (121) eine Mehrzahl von Führungselementaussparungen (1211) aufweist, in welchen die Mehrzahl von Führungselementen (1220) wirkverbunden mit der Vorschubscheibe (121) lagerbar sind, so dass bei Rotation des Mitnehmerelements (122) die Vorschubscheibe (121) mitführbar ist.

3. Reibe nach Anspruch 1, **dadurch gekennzeichnet, dass** mindestens ein Führungselement (1220)
eine Rippe (1221),
welche sich über die Länge des Führungselementes (1220) erstreckend angeordnet ist, aufweist, welche in den Innenraum des Reibbehälters hineinragend ausgestaltet ist und Reibgut (2) rotativ über den Reibeinsatz (13) bewegt.

4. Reibe nach Anspruch 2, **dadurch gekennzeichnet, dass** das Aussengewinde (1210) der Vorschubscheibe (121) segmentiert ausgestaltet ist und in Wirkverbindung mit einem durchgehend ausgestalteten Innengewinde (123) auf der Innenfläche des Reibbehälters (12) steht.

5. Reibe nach Anspruch 4, **dadurch gekennzeichnet, dass** das die Führungselementaussparungen (1211) im Randbereich der Vorschubscheibe (121) das Aussengewinde (1210) querend angeordnet sind.

6. Reibe nach Anspruch 2, **dadurch gekennzeichnet, dass** das Aussengewinde (1210) der Vorschubscheibe (121) durchgehend ausgestaltet ist und in Wirkverbindung mit einem segmentiert ausgestalteten Innengewinde (123) auf der Innenfläche des Reibbehälters (12) steht.

7. Reibe nach Anspruch 6, **dadurch gekennzeichnet, dass** die Führungselementaussparungen (1211) vom Randbereich der Vorschubscheibe (121) und vom durchgehenden Aussengewinde (1210) beabstandet angeordnet sind.

8. Reibe nach Anspruch 1, **dadurch gekennzeichnet, dass** die Führungselemente (1220) des Mitnehmerelementes (122) flexibel ausgeführt sind, wodurch das Reibgut (2) innerhalb des Reibbehälters (12) in der Ebene parallel zum Reibeinsatz gehalten ist.

9. Reibe nach Anspruch 1, **dadurch gekennzeichnet, dass** die äussere Form des Reibbehälters (12) der Form des Reibguts (2) entsprechend, das Reibgut (2) umschliessend ausgestaltet ist.

10. Reibe nach Anspruch 1, **dadurch gekennzeichnet, dass** die Mehrzahl von Führungselementen (1220) direkt oder indirekt lösbar oder unlösbar mit einem Kragen (1222) verbunden ist, wodurch die Einführtiefe des Mitnehmerelementes (122) in den Reibbehälter (12) begrenzt ist.

11. Reibe, nach Anspruch 1, **dadurch gekennzeichnet, dass** die Mehrzahl von Führungselementen (1220) des Mitnehmerelementes (122) mindestens annähernd parallel zu den Wänden des Reibbehälters (12) verlaufen.

12. Reibe nach Anspruch 10, **dadurch gekennzeichnet, dass** der Kragen (1222) des Mitnehmerelementes (122) mit einem Deckel (11) den Innenraum des Reibbehälters (12) dichtend oberhalb der Vorschubscheibe (121) verschliessbar ist, wobei in dem gebildeten Zwischenraum Reibeinsätze (124) lagerbar sind.

## Claims

1. A grater for gratable food having different degrees of hardness with a constant installation height, comprising a grating container (12), which can be closed by means of a lid (11) and in which an attachment element (122) comprising a plurality of guide elements (1220) is supported so as to be capable of being rotated and in which a feed disk (121) is supported so as to be movable linearly in the direction of the longitudinal axis of the grating container (12) from an insertion side (120) of the grating container (12) to a grating side (124), wherein material (2), which is to be grated, which is located in the grating container (12), can be guided by means of the attachment element (122) via a grating insert (13), which is affixed on the grating side (124) of the grating container (12) so as to be capable of being detached,
**characterized in that** the feed disk (121) is provided with an external thread (1210) on a jacket surface (1213), said external thread (1210) being operatively connected to an internal thread (123) located in the grating container (12), whereby the feed disk (121) can be moved linearly and can be pressed onto a material (2), which is to be grated, within the grating container (12).

2. The grater according to claim 1, **characterized in that** the feed disk (121) encompasses a plurality of guide element recesses (1211), in which the plurality of guide elements (1220) can be supported so as to be operatively connected to the feed disk (121), so that the feed disk (121) can be carried along in response to the rotation of the attachment element (122).

3. The grater according to claim 1, **characterized in that** at least one guide element (1220) encompasses a rib (1221), which is arranged so as to extend across the length of the guide element (1220) and which is embodied so as to project into the interior of the grating container and moves material (2), which is to be grated, so as to rotate over the grating insert (13).

4. The grater according to claim 2, **characterized in that** the external thread (1210) of the feed disk (121) is embodied so as to be segmented and is operatively connected to an internal thread (123), which is embodied so as to be continuous, on the inner surface of the grating container (12).

5. The grater according to claim 4, **characterized in that** the guide element recesses (1211) in the edge area of the feed disk (121) are arranged so as to cross the external thread (1210).

6. The grater according to claim 2, **characterized in that** the external thread (1210) of the feed disk (121) is embodied so as to be continuous and is operatively connected to an internal thread (123), which is embodied so as to be segmented, on the inner surface of the grating container (12).

7. The grater according to claim 6, **characterized in that** the guide element recesses (1211) are arranged so as to be spaced apart from the edge area of the feed disk (121) and from the continuous external thread (1210).

8. The grater according to claim 1, **characterized in that** the guide elements (1220) of the attachment element (122) are embodied so as to be flexible, whereby the material (2), which is to be grated, is held within the grating container (12) in the plane parallel to the grating insert.

9. The grater according to claim 1, **characterized in that** the outer shape of the grating container (12), corresponding to the shape of the material (2), which is to be grated, is embodied so as to enclose the material (2), which is to be grated.

10. The grater according to claim 1, **characterized in that** the plurality of guide elements (1220) is directly or indirectly connected to a collar (1222) so as to be capable of being detached or so as to be non-detachable, whereby the insertion depth of the attachment element (122) into the grating container (12) is limited.

11. The grater according to claim 1, **characterized in that** the plurality of guide elements (1220) of the attachment element (122) run at least approximately parallel to the walls of the grating container (12).

12. The grater according to claim 10, **characterized in that** the collar (1222) of the attachment element (122) can be closed above the feed disk (121) by means of a lid (11) so as to seal the interior of the grating container (12), wherein grating inserts (124) can be supported in the formed intermediate space.

## Revendications

1. Râpe pour des aliments à râper de différents degrés de dureté avec un encombrement en hauteur restant constant comprenant un bol à râper (12) pouvant se fermer par un couvercle (11) dans lequel un élément d'entraînement (122) avec une pluralité d'éléments de guidage (1220) est logé en étant mobile en rotation et dans lequel un disque d'avance (121) est logé en étant mobile de façon linéaire d'un côté d'introduction (120) du bol à râper (12) vers un côté râpe (124) dans la direction de l'axe longitudinal du bol à râper (12), le produit à râper (2) se trouvant dans le bol à râper (12) étant susceptible d'être guidé par l'élément entraîneur (122) par l'intermédiaire d'un insert à râper (13) fixé de façon amovible sur le bol à râper (12), sur le côté rape (124),
**caractérisé en ce que** le disque d'avance (121) est muni d'un filetage (1210) sur une surface d'enveloppe (1213) qui est en interaction avec un taraudage (123) situé dans le bol à râper (12), en conséquence quoi, le disque d'avance (121) est mobile de façon linéaire et susceptible d'être pressé sur un produit à râper (12) à l'intérieur du bol à râper (12).

2. Râpe selon la revendication 1, **caractérisée en ce que** le disque d'avance (121) comporte une pluralité d'échancrures pour éléments de guidage (1211) dans lesquelles les éléments de guidage (1220) sont susceptibles d'être logés en étant en interaction avec le disque d'avance (121), de sorte que lors de la rotation de l'élément entraîneur (122) le disque d'avance (121) puisse être entraîné.

3. Râpe selon la revendication 1, **caractérisée en ce qu'**au moins un élément de guidage (1220) comporte une nervure (1221) qui est disposée en s'étendant sur la longueur de l'élément de guidage (1220), laquelle est conçue pour saillir vers l'intérieur du bol à râper et déplace du produit à râper (2) en rotation sur l'insert à râper (13).

4. Râpe selon la revendication 2, **caractérisée en ce que** le filetage (1210) du disque d'avance (121) est conçu sous forme segmentée et est en interaction avec un taraudage (123) conçu d'un seul tenant sur la surface intérieure du bol à râper (12).

5. Râpe selon la revendication 4, **caractérisée en ce que** les échancrures pour éléments de guidage (1211) sont disposées dans la zone marginale du disque d'avance (121) en croisant le filetage (1210).

6. Râpe selon la revendication 2, **caractérisée en ce que** le filetage (1210) du disque d'avance (121) est conçu d'un seul tenant et est en interaction avec un taraudage (123) conçu sous forme segmentée sur la surface intérieure du bol à râper (12).

7. Râpe selon la revendication 6, **caractérisée en ce que** les échancrures pour éléments de guidage (1211) sont disposés en étant écartés de la zone marginale du disque d'avance (121) et du filetage (1210) d'un seul tenant.

8. Râpe selon la revendication 1, **caractérisée en ce que** les éléments de guidage (1220) de l'élément entraîneur (122) sont conçus en version flexible, ce qui a pour effet de maintenir le produit à râper (2) à l'intérieur du bol à râper (12) dans le plan à la parallèle de l'insert à râper.

9. Râpe selon la revendication 1, **caractérisée en ce que** la forme extérieure du bol à râper (12) est conçu pour correspondre à la forme du produit à râper (2) de sorte à entourer le produit à râper (2).

10. Râpe selon la revendication 1, **caractérisée en ce que** la pluralité d'éléments de guidage (1220) est reliée directement ou indirectement, en étant amovible ou non amovible avec un collet (1222) ce qui a pour effet de limiter la profondeur d'introduction de l'élément entraîneur (122) dans le bol à râper (12).

11. Râpe selon la revendication 1, **caractérisée en ce que** la pluralité d'éléments de guidage (1220) de l'élément entraîneur (122) s'étend au moins approximativement à la parallèle des parois du bol à râper (12).

12. Râpe selon la revendication 10, **caractérisée en ce que** le collet (1222) de l'élément entraîneur (122) est susceptible de fermer de façon étanche avec un couvercle (11) l'intérieur du bol à râper (12) au dessus du disque d'avance (121), des râpes à insérer (124) pouvant être rangées dans l'espace ainsi formé.
